**Europäisches Patentamt**

**European Patent Office**

**Office européen des brevets**

(19)

(11) **EP 1 510 930 A2**

(12) # EUROPEAN PATENT APPLICATION

(43) Date of publication:
**02.03.2005 Bulletin 2005/09**

(51) Int Cl.⁷: **G06F 13/42**

(21) Application number: **04009995.4**

(22) Date of filing: **27.04.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(30) Priority: **29.08.2003 US 498812 P**<br>**13.10.2003 US 684789**<br><br>(71) Applicant: **Broadcom Corporation**<br>**Irvine, California 92619-7013 (US)** | (72) Inventors:<br>• **Novak, Mark**<br>  **CA 92618 Irvine (US)**<br>• **Squiers, Ronald J.**<br>  **CA 92618 Irvine (US)**<br><br>(74) Representative: **Jehle, Volker Armin, Dipl.-Ing.**<br>**Patentanwälte**<br>**Bosch, Graf von Stosch, Jehle,**<br>**Flüggenstrasse 13**<br>**80639 München (DE)** |

(54) **Memory interface system and method**

(57) An interface connects data processing components and data memories that support data transfer at different data rates.

The interface handles complex timing and asynchronous delays associated with these different rates of data transfer. The interface may be used to connect data processing components that operate at 133 MHz with DDR SDRAM devices that operate at 200 MHz to 266 MHz data rates.

FIG. 1

EP 1 510 930 A2

**Description**

CROSS-REFERENCE TO RELATED APPLICATION(S)

This application claims the benefit of U.S. Provisional Application No. 60/498,812, filed on August 29, 2003, the content of which is incorporated by reference.

FIELD OF THE INVENTION

The invention relates to data processing systems and, more specifically, to systems and methods for interfacing data processing components and data memories that support data transfer at different data rates.

BACKGROUND

A typical data processing component uses a data memory to store information used in data processing operations. For a example, a central processing unit ("CPU") in a personal computer or server may store data in one or more random access memories ("RAM") connected to the CPU via one or more data busses.
Data memory manufacturers are continually developing faster data memories. That is, data memories that may be written to or read from at rates that are faster than previous data memories. For example, common types of RAM include synchronous dynamic RAM ("SDRAM") and dual data rate SDRAM ("DDR SDRAM").
As its name implies, DDR SDRAM supports data rates that are approximately twice the data rate of SDRAM. This is accomplished by clocking data into and out of the DDR SDRAM on both the rising and falling edges of a signal. In contrast, conventional data memories such as SDRAM clock data into or out of the device using a single edge such as the rising edge of a signal.
Different DDR SDRAM devices may operate at different data rates. For example, these devices may be driven by clocks having clock speeds of 133 MHz or 266 MHz.
Some processing components, on the other hand, are designed to interface with data memories that operate at a particular data rate. For example, many personal computer components support the PCI/PCI-X bus. This bus may transfer data at 133 MHz.
A need exists for techniques that enable conventional data processing components to interface with data memories, where the data processing components and data memories support data transfer at different data rates.

SUMMARY

The invention relates to systems and methods for interfacing data processing components and data memories that support data transfer at different data rates. A system constructed in accordance with the invention may handle the complex timing and asynchronous delays that may be associated with such interfacing.
In some embodiments of a system constructed in accordance with the invention, an interface is provided between a DDR SDRAM and a data processing component that transfers data at 133 MHz. The interface may support DDR SDRAM data rates from 200 MHz up to 266 MHz, without corresponding changes in the data rate supported by data processing component.
In some embodiments, the interface may support DDR SDRAMs that operate at different data rates through the use of a delay lock loop that is relatively insensitive to the duty cycle of the delayed signal. Thus, the delay lock loop may be used to generate a dual-edged signal such as DQS that clocks data into and out of a DDR SDRAM. For example, the delay lock loop may be used on DQS to tune the data capture window for multiple operating frequencies.
In some embodiments, a phase reference clock is generated to facilitate accurate transfers between the data processing component and the data memories. The phase of the phase reference clock corresponds to transitions of a clock used by the data processing component. For example, the phase reference clock may be high when the clock used by the data processing component transitions from low to high, and vice versa. The phase reference clock may be used to synchronize a higher speed clock with the clock used by the data processing component.
In some embodiments, a read enable signal is used in conjunctions with reads from a DDR SDRAM. The read enable signal facilitates obtaining reliable data from the DDR SDRAM when using a tri-state clock signal such as DQS.
In some embodiments, an alternating inverting clock tree is used to generate dual-edged clock signals such as DQS. In this way, the duty cycle of the dual-edged clock signals may be maintained within an acceptable range.
According to another aspect of the invention, a data memory interface apparatus comprises:

at least one interface for transmitting data and receiving data at a first data rate;

at least one memory interface for transmitting data to and receiving data from at least one dual data rate memory at a second data rate;

at least one processing circuit for generating and receiving at least one dual edged data strobe to transmit data to and receive data from the at least one dual data rate memory.

Advantageously, the at least one interface uses a clock operating at the second data rate and at least one phase reference signal to clock data into or out of the at least one interface.

Advantageously, the at least one phase reference signal is indicative of either rising edges or falling edges of a clock operating at the first data rate.

Advantageously, the at least one phase reference signal is distributed in a daisy chain to a plurality of processing modules in the at least one processing circuit.

Advantageously, the at least one interface comprises at least one register for clocking data into or out of the at least one interface according to a clock operating at the second data rate.

Advantageously, the at least one processing circuit comprises at least one delay lock loop for delaying the at least one dual-edged data strobe.

Advantageously, the at least one delay lock loop provides substantially equal delays for a 100 MHz dual-edged data strobe and a 133 MHz dual-edged data strobe.

Advantageously, the at least one processing circuit comprises at least one alternating inverting buffer tree for generating the at least one dual-edged data strobe.

Advantageously, the at least one processing circuit generates data according to a first edge of a clock operating at the second data rate and generates the at least one dual-edged data strobe according to a second edge of the clock that immediately follows the first edge.

Advantageously, the at least one processing circuit selectively gates the at least one dual-edged data strobe when receiving data from the at least one dual data rate memory.

Advantageously, the at least one dual-edged data strobe is gated off from at least a portion of the at least one processing circuit when the at least one dual-edged data strobe is in a high impedance state.

Advantageously, the at least one processing circuit comprises a plurality of processing modules for processing bytes of data transmitted to and received from the at least one dual data rate memory.

Advantageously, the at least one processing circuit comprises at least one data memory for storing data received from the at least one dual data rate memory.

Advantageously, the at least one data memory comprises at least one FIFO.

Advantageously, the at least one dual data rate memory comprises DDR SDRAM.

Advantageously, the at least one interface comprises at least one buffer.

According to another aspect of the invention, a method of interfacing to a data memory comprises:

transmitting data from and receiving data by at least one interface at a first data rate;
transmitting data to and receiving data from at least one dual data rate memory at a second data rate;
generating and receiving at least one dual edged data strobe to transmit data to and receive data from the at least one dual data rate memory.

Advantageously, the method comprises clocking data into or out of the at least one interface using a clock operating at the second data rate and at least one phase reference signal.

Advantageously, the at least one phase reference signal is indicative of either the rising edges or the falling edges of a clock operating at the first data rate.

Advantageously, the at least one phase reference signal is distributed in a daisy chain to a plurality of processing modules.

Advantageously, the method comprises delaying the at least one dual-edged data strobe by at least one delay lock loop.

Advantageously, the at least one delay lock loop provides substantially equal delays for a 100 MHz dual-edged data strobe and a 133 MHz dual-edged data strobe.

Advantageously, the method comprises generating the at least one dual-edged data strobe by at least one alternating inverting buffer tree.

Advantageously, the method comprises generating data according to a first edge of a clock operating at the second data rate and generating the at least one dual-edged data strobe according to a second edge of the clock that immediately follows the first edge.

Advantageously, the method comprises selectively gating the at least one dual-edged data strobe when receiving data from the at least one dual data rate memory.

Advantageously, the at least one dual-edged data strobe is gated off when the at least one dual-edged data strobe is in a high impedance state.

According to another aspect of the invention, a data memory interface apparatus comprises:

at least one interface for transmitting data to and receiving data from the at least one data processor at a first data rate using a clock signal operating at a second data rate and a phase reference signal;
at least one memory interface for transmitting data to and receiving data from at least one DDR SDRAM at a second data rate according to at least one DQS signal;
at least one FIFO for storing data received from the at least one DDR SDRAM; and
at least one processing circuit comprising:

at least one circuit for selectively gating at least one DQS signal received from the at least one DDR SDRAM;
at least one delay lock loop for delaying at least one DQS signal received from the at least one DDR SDRAM; and
at least one alternating inverting buffer tree for generating a plurality of DQS signals from the delayed at least one DQS signal to clock data into the at least one FIFO.

Advantageously, the at least one phase reference signal is indicative of either rising edges or falling edges of a clock operating at the first data rate.

Advantageously, the at least one phase reference signal is distributed in a daisy chain to a plurality of processing modules in the at least one processing circuit.

Advantageously, the at least one processing circuit generates data according to a first edge of a clock operating at the second data rate and generates the at least one DQS signal according to a second edge of the clock that immediately follows the first edge.

Advantageously, the at least one DQS signal is gated off from at least a portion of the at least one processing circuit when the at least one dual-edged data strobe is in a high impedance state.

Advantageously, the at least one processing circuit comprises a plurality of processing modules for processing bytes of data transmitted to and received from the at least one DDR SDRAM.

BRIEF DESCRIPTION OF THE DRAWINGS

These and other features, aspects and advantages of the invention will be more fully understood when considered with respect to the following detailed description, appended claims and accompanying drawings, wherein:

Figure 1 is a block diagram of one embodiment of a system constructed in accordance with the invention;
Figure 2 is a block diagram of one embodiment of a system constructed in accordance with the invention;
Figure 3 is a block diagram of one embodiment of a layout of processing modules in an integrated circuit constructed in accordance with the invention;
Figure 4 is a timing diagram of one embodiment of clocking signals in accordance with the invention;
Figure 5 is a block diagram of one embodiment of a portion of an interface constructed in accordance with the invention;
Figure 6 is a block diagram of one embodiment of a portion of an interface constructed in accordance with the invention;
Figure 7 is a timing diagram of one embodiment of signals associated with a write operation in accordance with the invention;
Figure 8 is a block diagram of one embodiment of a alternating inverting clock buffer tree constructed in accordance with the invention;
Figure 9 is a timing diagram of one embodiment of signals associated with a read operation in accordance with the invention;
Figure 10 is a timing diagram of one embodiment of signals associated with a read operation in accordance with the invention;
Figure 11 is a block diagram of one embodiment of a delay lock loop constructed in accordance with the invention;
Figure 12 is a block diagram of one embodiment of a system constructed in accordance with the invention; and
Figure 13 is a block diagram of one embodiment of a system constructed in accordance with the invention.

DETAILED DESCRIPTION

The invention is described discussed below, with reference to detailed illustrative embodiments. It will be apparent that the invention can be embodied in a wide variety of forms, some of which may appear to be quite different from those of the disclosed embodiments. Consequently, the specific structural and functional details disclosed herein are merely representative and do not necessarily limit the scope of the invention.

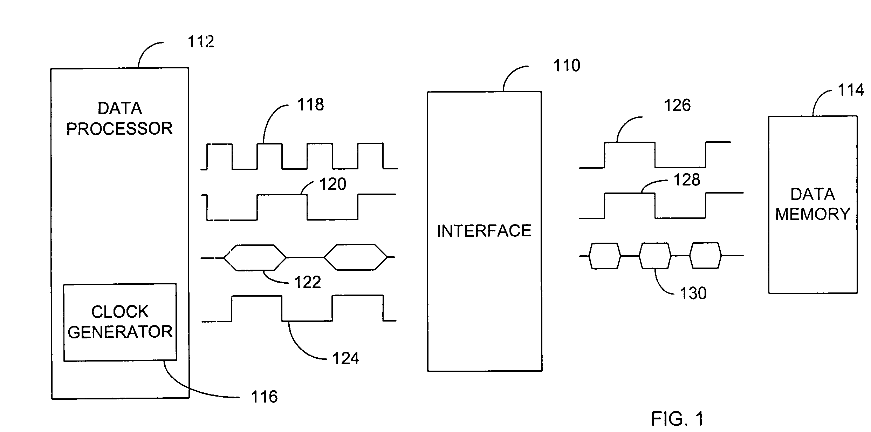

Figure 1 is a block diagram of one embodiment of a data processing system constructed in accordance with the invention. An interface 110 facilitates transfer of data between a data processor 112 and a data memory 114.

The data processor 112 includes a clock generator 116 that generates several clock signals. A first clock signal 118 (266 MHz in this embodiment) is used to generate a second clock signal 120 (133 MHz in this embodiment).

Data transfers between the data processor 112 and the interface 110 may occur at the 133 MHz rate of the second clock signal 120. This data transfer is represented in Figure 1 by the data signals 122 which coincide with the rising edge of the clock signal 120.

The first clock signal 118 is routed to the interface 110 and then is divided by two and sent to the data memory 114 as signal 126. The interface 110 and the data memory 114 use the signals 118 and 126 to clock data into and out of the data memory 114 at a rate of 266 MHz.

Data is clocked into and out of the data memory 114 on each edge of a dual-edged signal 128. That is, data signals applied to data input lines (represented by signals 130) are clocked into the data memory 114 on both the rising edge and the falling edge of the dual-edged signal 128. In addition, the data memory 114 clocks data out to data output lines (again, represented by signals 130) on both the rising edge and the falling edge of the dual-edged signal 128.

The interface 110 handles the complex timing associated with clocking the data memory at 133 MHz as well as the asynchronous delays associated with reading data from the data memory 114. As the timing waveforms in Figure 1 illustrate, when the data processor 112 writes data to the data memory 114, the data processor 112 clocks out data 122 at a 133 MHz rate. The interface 110 must then process the data and associated control signals to send data 130 to the data memory 114 at a 266 MHz rate. Conversely, when the data processor 112 reads data from the data memory 114, the interface 110 receives data 130 from the data memory at a 266 MHz rate. The interface 110 then processes this data and associated control signals to send data 122 to the data processor 112 at a 133 MHz rate.

To facilitate synchronizing data transfers at these different rates, the clock generator 116 generates a phase reference signal 124. The phase of the phase reference signal 116 corresponds to transitions of the second clock signal 120. For example, in one embodiment, the phase reference signal 124 is high when the second clock signal 120 transitions from low to high. Conversely, the phase reference signal 124 is low when the second clock signal 120 transitions from high to low. The interface 110 uses the phase reference signal 124 to facilitate clocking data to or from the data processor 112 using a 266 MHz clock (e.g., clock 118).

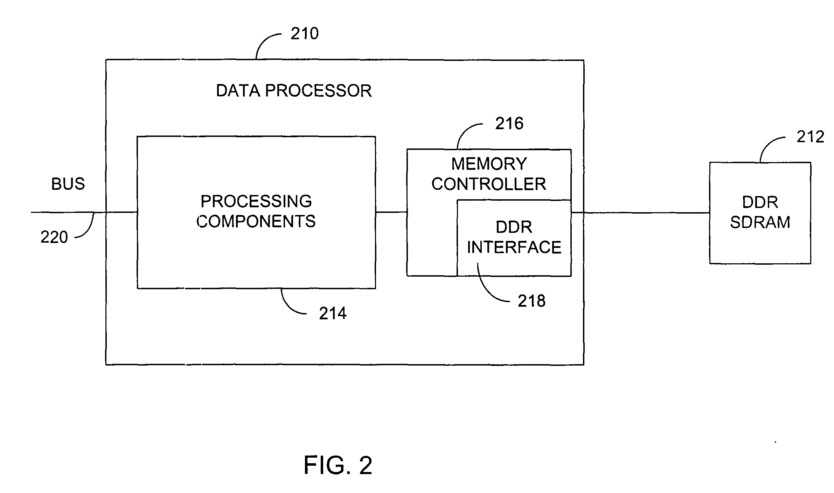

Referring now to Figure 2, one embodiment of a system constructed according to the invention will be treated in more detail. A data processor 210 includes processing components 214 to perform processing tasks in a computer system (not shown). The data processor 210 connects to a bus (e.g., PCI/PCI-X or HyperTransport bus) 220 in the computer system to enable the processing components 214 to communicate with other processing entities in the computer.

The data processor 210 connects to one or more DDR SDRAM devices 212 (hereafter "DDR SDRAM")to store data used by the processing components 214. A memory controller unit 216 (hereafter "memory controller" or "MCU") provides a generic read/write interface for the processing components 214 to the DDR SDRAM 212. For example, the memory controller 216 initializes the DDR SDRAM 212 and provides control and configuration settings required to access the DDR SDRAM 212.

The memory controller 216 includes an interface 218 to DDR SDRAM (hereafter "DDR interface") that enables the core components of the memory controller 216 (hereafter "MCU core") to interface with DDR SDRAM 212 that operates at a different data transfer rate than the MCU core. For example, in some embodiments the DDR interface 218 supports 133 MHz data transfers to and from the MCU core and either 200 MHz or 266 MHz data transfers to and from the DDR SDRAM 212. The following discussion will focus primarily on a system with DDR SDRAM 212 that operates at 266 MHz.

Table 1 lists one embodiment of signals that are routed between the MCU core and the DDR interface 218. The "direction" column refers data flow in or out of the DDR interface 218. The mclk266 signal is the 266 MHz clock generated by the MCU core. The signal phase_133 is a phase reference signal and is discussed in more detail below.

To support the difference in data transfer rates between the MCU core and the DDR SDRAM 212, the memory controller 216 sends data to and receives data from the DDR interface 218 via a pair of double wide 128 bit data busses running at 133 MHz. Separate 128 bit data busses are used to read and write data. In this way, data may be clocked into and out of the MCU core at 133 MHz even though the DDR SDRAM 212 may be read or written at 266 MHz.

Each half of a 128 bit data bus may be written to or read from the DDR SDRAM 212 on alternating clock cycles of the 266 MHz clock. These alternating cycles of the 266 MHz clock correspond to rising and falling edges of a dual-edged data strobe DQS. Hence, each 64 bits of data is associated with either a rising or falling edge of DQS.

Each 64 bit portion of the data busses also is associated with an 8-bit error correction bus. Accordingly, Table 1 lists four bus groups. A 64 bit data bus ("dq") and 8 bit error correction ("ecc") bus are associated with data read from DDR SDRAM on the rising ("pos") edge of DQS. A 64 bit dq bus and 8 bit ecc bus are associated with data read from DDR SDRAM on the falling ("neg") edge of DQS. A 64 bit dq bus and 8 bit ecc bus are associated with data written to DDR SDRAM on the rising ("pos") edge of DQS. A 64 bit dq bus and 8 bit ecc bus are associated with data written to DDR SDRAM on the falling ("neg") edge of DQS.

When writing data to or reading data from the DDR SDRAM 212 the MCU core generates several control signals including 13 address signals, chip select ("cs"), row address strobe ("ras") and column address strobe ("cas"). During a write operation, the MCU core also generates a write enable signal ("we").

| Signal Name | Direction | Function |
|---|---|---|
| mclk266 | In | MCU SDRAM clock (266 MHz) |
| phase_133 | In | Is 1 on the rising edge of mclk266 that marks the rising edge of mclk133 |
| Rst | In | Core Reset, treated as asynchronous reset |
| aio_avdd_mcudll | In | AVDD power to DLL |
| aio_avss_mcudll | In | AVSS power to DLL |
| din_iddq | In | IDDQ test signal to DLL to disable current sources |
| mcu_cfg_registered_sdram | In | REGISTERED_SDRAM field from MCU_SDRAM_MODE register |
| mcu_cfg_cas_latency[2:0] | In | CAS_LATENCY field from MCU_SDRAM_MODE register |
| mcu_cfg_burst_length[2:0] | In | BURST_LENGTH field from MCU_SDRAM_MODE register |
| fifo_overrun | Out | Fatal error indicating that input transitions were inconsistent over the 9 DQS signals |
| rd_data_valid | Out | Read data is valid this mclk133 cycle |
| ddrio2ecc_dq_read_pos[63:0] | Out | Read data from the rising edge of DQS |
| ddrio2ecc_ecc_read_pos[7:0] | Out | Read ECC from the rising edge of DQS |
| ddrio2ecc_dq_read_neg[63:0] | Out | Read data from the falling edge of DQS |
| ddrio2ecc_ecc_read_neg[7:0] | Out | Read ECC from the falling edge of DQS |
| ecc2ddrio_di_pos[63:0] | In | Write data to send on the rising edge of DQS |
| ecc2ddrio_ecc_pos[7:0] | In | Write ECC to send on the rising edge of DQS |
| ecc2ddrio_di_neg[63:0] | In | Write data to send on the falling edge of DQS |
| ecc2ddrio_ecc_neg[7:0] | In | Write ECC to send on the falling edge of DQS |
| mac2ddrio_a[12:0] | In | Outgoing SDRAM Address |
| mac2ddrio_ba[1:0] | In | Outgoing SDRAM Bank Select |
| mac2ddrio_cs_n[1:0] | In | Outgoing SDRAM Chip Select |
| mac2ddrio_ras_n | In | Outgoing SDRAM RASn |
| mac2ddrio_cas_n | In | Outgoing SDRAM CASn |
| mac2ddrio_we_n | In | Outgoing SDRAM WEn |

TABLE 1

Table 2 lists one embodiment of signals that are routed between the DDR interface 218 and the DDR SDRAM 212. The DDR interface 218 provides the 133 MHz mclk to the DDR SDRAM 212 as two differential signals.

The DDR interface 218 clocks data into and out of the DDR SDRAM 212 using a the dual-edged data strobe DQS. DQS is a tri-state signal that may be driven by either the DDR interface 218 or the DDR SDRAM 212. DQS goes to a high impedance state when neither of these devices is driving DQS. Since DQS is a dual-edged data strobe data is transferred into and out of the DDR SDRAM 212 on both the rising and falling edges of DQS.

In the discussion that immediately follows, the DDR interface 218 writes data to and reads data from the DDR SDRAM 212 via two 64 bit data busses at a frequency of 266 MHz. Hence, Table 2 lists one 64 bit dq bus for write operations and one 64 bit dq bus for read operations. Each 64 bit bus has an associated 8 bit ecc bus.

Table 2 also lists several enable signals. These signals are use to enable the output dq and ecc busses and the output dqs.

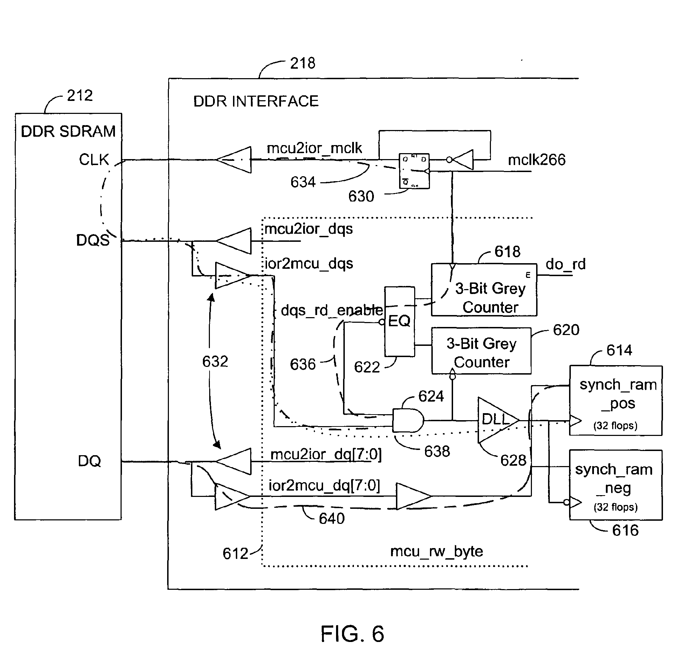

The DDR interface 218 provides up to nine dqs signals for each input and output 72 bit dq and ecc bus pair. As depicted in Figure 6, the input and output dqs signals are combined outside the data processor. As will be discussed in more detail below, in some embodiments a separate dqs signal is used to independently clock each byte of data and the ecc byte.

The DDR interface 218 also generates several control signals based on those discussed above in conjunction with Table 1. Additional details of several of signals from Tables 1 and 2 will be provided in the discussion that follows.

| Signal Name | Direction | Function |
|---|---|---|
| mcu2ior_mclk | Out | Memory Clock |
| mcu2ior_mclk_n | Out | Differential Memory Clock |
| ior2mcu_dq[63:0] | In | input memory data bus |
| mcu2ior_dq[63:0] | Out | output memory data bus |
| mcu2ior_dq_en_n[63:0] | Out | output memory data bus enable |
| ior2mcu_ecc[7:0] | In | input Error Correction Code |
| mcu2ior_ecc[7:0] | Out | output Error Correction Code |
| mcu2ior_ecc_en_n[7:0] | Out | output Error Correction Code enable |
| ior2mcu_dqs[8:0] | In | input data strobe |
| mcu2ior_dqs[8:0] | Out | output data strobe |
| mcu2ior_dqs_en_n[8:0] | Out | output data strobe enable |
| mcu2ior_cs_n[1:0] | Out | Memory chip selects |
| mcu2ior_ras_n | Out | Memory row address strobe |
| mcu2ior_cas_n | Out | Memory column address strobe |
| mcu2ior_we_n | Out | Memory write enable |
| mcu2ior_a[12:0] | Out | Memory multiplexed Row/Column address |
| mcu2ior_ba[1:0] | Out | Memory Bank address |

TABLE 2

The design of the system of Figure 2 addresses several timing considerations associated with interfacing devices that operate at different frequencies. For example, is it desirable to maintain comparable characteristics for the transmission medium for signals that are routed between the these devices. In a typical embodiment, the data processor 210 and the DDR SDRAM 212 are each implemented in a separate integrated circuit ("hereafter "chip"). Thus, the manner of routing signals between the DDR interface 218 and the DDR SDRAM 212 is one consideration that may need to be taken into account to ensure proper timing in the system.

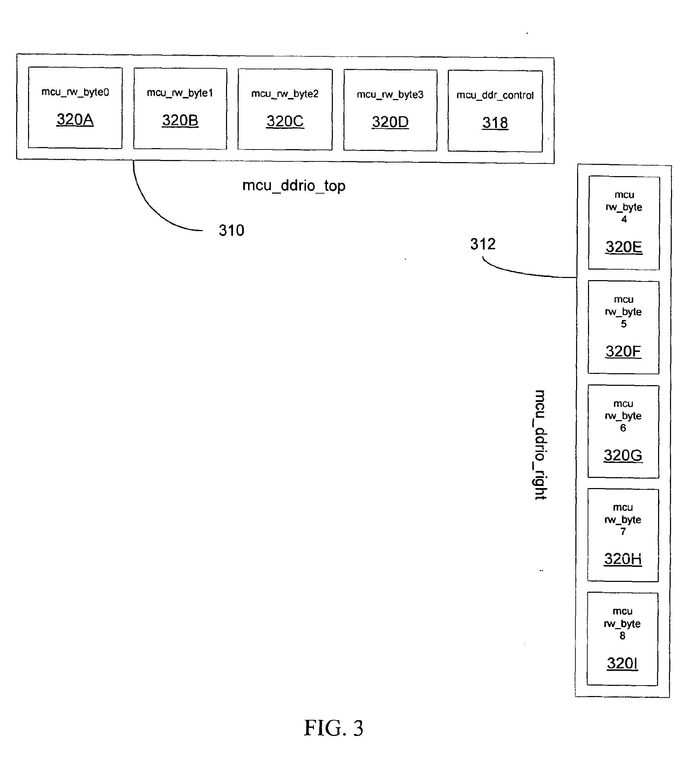

Figure 3 describes one embodiment where the DDR interface 218 is implemented as several modules. Specifically, a control module ("mcu_ddr_control") 318 is defined for handling the processing of the address signals and most control signals. In addition, nine data modules ("mcu_rw_byte") 320A-I are defined, each of which handles the transfer of one byte of data to and from the DDR SDRAM.

To address timing considerations as discussed above, these modules are physically arranged on the die of the data processor chip as depicted in Figure 3. The DDR interface is partitioned into two main modules, mcu_ddrio_top 310 and mcu_ddrio_right 312 that are placed immediately inside of the pads along the top and right sides of the die, respectively. These two modules act as containers for the two primary modules: mcu_ddr_control and mcu_rw_byte. The mcu_rw_byte module contains the logic to read and write a single byte of the DDR SDRAM data and is instantiated nine times, once for each byte on the DQ/ECC bus. The mcu_ddr_control module 318 has the function of generating all address and control signals to the DDR SDRAM 212 as well as generating the synchronized reset for the nine mcu_rw_byte modules 320A-I. Within mcu_ddr_right 312 there are five instances of mcu_rw_byte. Within mcu_ddr_top 310 there are four instances of mcu_rw_byte and the one instance of mcu_ddr_control.

The mcu_rw_byte module is routed twice, once for mcu_ddrio_top 310 and again for mcu_ddrio_right 312, to match the orientation of the die side. It is then repeated for all nine bytes of data.

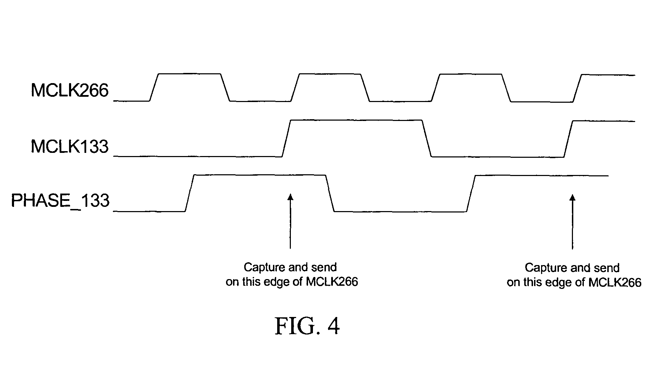

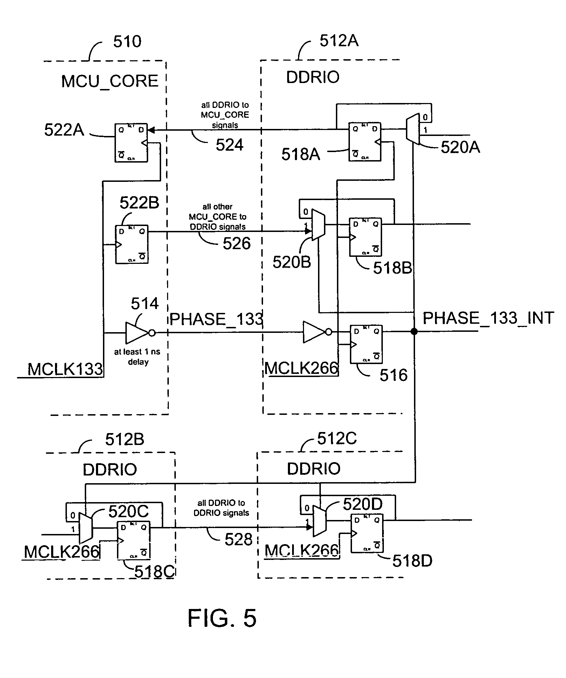

The system employs a multi-cycle protocol to allow for flight delay around the edge of the die. This protocol also is employed when communicating with the processing components. The multi-cycle protocol will be discussed in more detail in conjunction with Figures 4 and 5. Figure 4 depicts one embodiment of the multi-cycle protocol.

Figure 5 depicts one embodiment of a communications interface between the MCU core and several DDR interface modules. The circuits designated "DDRIO" within dashed lines in Figure 5 represent a portion of the mcu_ddr_control and mcu_rw_byte modules. The circuit designated MCU_CORE within dashed lines in Figure 5 represent a portion of the MCU core.

Figure 4 depicts two clock signals: a 266 MHz clock, MCLK266, and a 133 MHz clock, MCLK133. A clock generator in the MCU core (not shown) generates MCLK133 and MCLK266 in phase alignment so their rising edges are aligned with minimal skew between them (approximately 200 ps in one embodiment).

As discussed above in conjunction with Tables 1 and 2, MCLK266 is routed to the DDR interface 218 and the DDR SDRAM 212. These components use MCLK266 or a derivative of MCLK266 to clock data into and out of the DDR SDRAM at 266 MHz.

MCLK133 controls the primary data transfers in the data processor 210. For example, the MCU core 510 (Figure 5) may clock data to and from the DDR SDRAM 212 according to MCLK133. The DDR interface 216 does not receive MCLK133.

Data is captured and sent between modules on the rising edge of MCLK133, or the coincident rising edge of MCLK266. As indicated by flops (e.g., flip flops or registers) 522A-B in Figure 5, data is clocked into and out of the MCU core 510 on the rising edge of MCLK133.

The DDR interface uses a phase reference signal ("PHASE_133") to determine the phase relationship of MCLK133. PHASE_133 is high at the rising edge of MCLK266 that corresponds with the rising edge of MCLK133. PHASE_133 is phase aligned so that it meets the setup and hold requirements of flops in the DDR interface. In the embodiment of Figure 5, PHASE_133 is generated by delaying MCLK133 through an inverter 514.

As illustrated in Figure 5, PHASE_133 is phase aligned with MCLK266 by a flop 516 in DDRIO module 512A to generate an internal PHASE_133 signal ("PHASE_133_INT"). PHASE_133_INT controls multiplexers 520A-D to select either the current output value of the corresponding flop 518A-D or an input value to be clocked into the flop 518A-D on the next rising edge of MCLK266. In this way, data (e.g., signals 524, 526 and 528) is clocked into or out of each DDRIO module 512A-C on the rising edges depicted in Figure 4.

In the embodiment of Figures 4 and 5, all signals propagate from source to destination in a single 133 MHz cycle time. To insure the signals meet timing requirements, appropriate buffering for the signals may need to be provided in the system. For example, some signals may need to be manually routed to meeting timing requirements.

To address timing issues associated with clocking data at 266 MHz, the system employs two primary signals for communication between the modules. The first of these signals is a module reset signal ("rst_mclk_266"). The second signal is a read signal that indicates when read data is valid ("rd_data_valid_in").

These two signals sent between modules originate from the center of the group. The rst_mclk_266 signal originates in mcu_ddr_control 318. The rd_data_valid_in signal originates from instance 4 32E of mcu_rw_byte (at the top of mcu_ddrio_right 312 in Figure 3). Both of these signals are received by all nine mcu_rw_byte modules.

The rst_mclk266 signal is registered within each mcu_rw_byte 320A-I and is qualified with phase_133 for most of the logic. The write logic depends on the phase relationship between clk133 and clk266 to start the write preamble at the appropriate time. The registered rst_mclk266 signal is qualified with phase_133 to insure proper startup for the write logic.

The rd_data_valid_in signal is the master signal which is registered as rd_data_valid for each mcu_rw_byte 320A-I. It is used to qualify and advance the rd_addr_bin_next pointer. The rd_addr_bin_next pointer points to the next entry to be read from synch_rams for data sent to the MCU core 510. The read operations will be discussed in more detail below.

The rd_data_valid_in signal also is the rd_data_valid signal (Table 1) that is output from mcu_ddrio_right 312 to the MCU core 510, indicating valid data to be registered. There is no right of refusal for the MCU core 510 when rd_data_valid is asserted. Instead, the MCU core 510 includes buffering (not shown) to prevent loss of input data.

In one version of the above embodiment, several control signals listed in Table 1 are routed directly from the MCU core 510 to each of the mcu_ddr_control and/or mcu_rw_byte modules. Hence, control logic is replicated in each module. Write data control signals are unidirectional and flow from mcu_ddr_control 318 to each mcu_rw_byte 320A-I. To insure the signals meet timing requirements of all modules, appropriate buffering for the signals may need to be provided in the system. For example, some signals may need to be manually routed to meeting timing requirements.

The operation of one embodiment of the mcu_ddr_control module 318 and the mcu_rw_byte modules 320A-I and will now be treated in more detail.

The mcu_ddr_control module 318 performs two primary operations. The first operation involves sending out the single edge SDRAM address and control signals and the clock. The second operation involves generating the 266 MHz reset for all the modules.

The outgoing clock, mcu2ddr_mclk, is generated from the output of a flop that is controlled by phase_133. Thus, mcu2ddr_mclk is the internal 133 MHz clock delayed by a clock-to-Q flop delay. This delay should be taken into account when enabling and disabling DQS during read cycles as described above.

The outgoing address and control signals change on the falling edge of mcu2ddr_mclk to insure that there is enough setup and hold margin at the SDRAM. The address and control signals are held in pipeline registers in mcu_ddr_control 318 to capture them on the rising edge of the internal 133 MHz clock and then present them on the falling edge of mcu2ddr_mclk. The signals handled in this manner are listed in Table 3.

| Internal source | External to SDRAM |
|---|---|
| mac2ddrio_cs[1:0] | mcu2ior_cs_n[1:0] |
| mac2ddrio_ras_n | mcu2ior_ras_n |
| mac2ddrio_cas_n | mcu2ior_cas_n |
| mac2ddrio_we_n | mcu2ior_we_n |
| mac2ddrio_a[12:0] | mcu2ior_a[12:0] |
| mac2ddrio_ba[1:0] | mcu2ior_ba[1:0] |

Table 3

The mcu_rw_byte module transmits bytes of data to and receives bytes of data from the DDR SDRAM. Referring to Figure 6, a portion of the processing circuits in a mcu_rw_byte module is depicted to the right of the dotted line 612.

Referring to Table 2 and Figure 6, the mcu_rw_byte module transmits and receives a byte of data on eight of the mcu2ior_dq signals (e.g., mcu2ior_dq[7:0]) and eight of the ior2mcu_dq signals (e.g., ior2mcu_dq[7:0]), respectively.

In some embodiments, a separate DQS bi-directional strobe is used to clock each byte of data. For example, in Figure 6 each module generates a mcu2ior_dqs signal and receives an ior2mcu_dqs signal.

Even though DQS is used for both reads and writes, the timing between them may be different. For write cycles, DQS transitions in the middle of the data window. For read cycles, DQS transitions at the very beginning of the data window. A DQS delay lock loop 628 may be used to delay DQS to capture the read data in the middle of the data valid window.

The operation of a mcu_rw_byte will now be treated in more detail by describing the write data path and the read data path. During a write operation, data flows from the MCU core 510 to the DDR interface 218 then to the DDR SDRAM 212. During a read operation, data flows from the DDR SDRAM 212 to the DDR interface 218 then to the MCU core 510.

A write operation at the interface between the MCU core 510 and the DDR interface 218 commences with assertion of the control signals listed in Table 1. Briefly, the MCU core 510 asserts the address, bank select, CS, RAS, CAS and WE signals, then presents data on the data busses.

As discussed above, to simplify timing in the system, data is transferred from the MCU core 510 to the DDR interface 218 in the 133 MHz domain. The data buses are made twice as wide at this interface and multiplexed inside the DDR interface 218 using the 266 MHz clock. Referring again to Table 1, the first word of data transmitted at the start of a burst write is taken from ecc2ddrio_di_pos[63:0] and ecc2ddrio_ecc_pos[7:0] (for the positive edge of DQS). The second word of data is taken from ecc2ddrio_di_neg[63:0] and ecc2ddrio_ecc_neg [7: 0] (for the negative edge of DQS). The cycle then repeats for every two 72 bit words of data.

The mcu_ddr_control 318 interprets the command signals from the MCU core 510 and initiates a write operation to the DDR SDRAM 212. This includes driving the address lines to the DDR SDRAM 212.

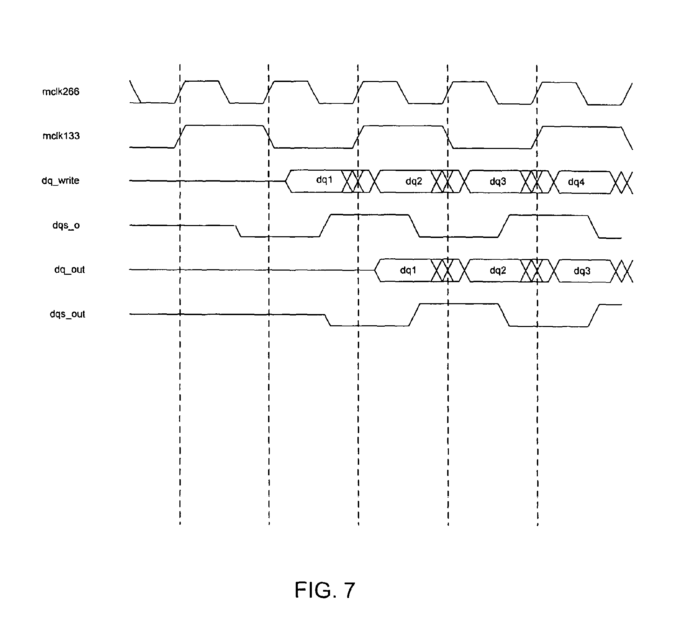

Basic timing waveforms of a write operation from the DDR interface 218 to the DDR SDRAM 212 are depicted in Figure 7. Figure 7 shows the two clocks (mclk266 and mclk133), DQS and the dq data generated internal to the DDR interface (dqs_o and dq_write, respectively), and the DQS and dq data output from the DDR interface (dqs_out and dq_out, respectively). Figure 7 also shows how, due to various delays in the system, the DQS and dq signals may be delayed with respect to the clocks.

The write cycle begins with a write preamble where DQS remains low for two 266 MHz clock cycles. In the non-registered DDR SDRAM mode, the write preamble begins on the rising edge of the DDR SDRAM clock that coincides with when the write command (RASn=1, CASn=0, WEn=0) is captured. In registered mode the write preamble begins two 266 MHz clock cycles later because of a pipeline delay through the register in the DDR SDRAM.

Once operating, the DDR interface 218 transmits a byte of write data once every 266 MHz clock cycle. As depicted in Figure 7, each edge of DQS is generated in the middle of the corresponding dq data window.

In one embodiment this skew is provided using the 50-50 duty cycle of the 266 MHz clock. Although this duty cycle may vary, the circuit will operate reliably when duty cycle varies over the normal range, as discussed below. Using this method, the two options for sending data and strobe are to transmit data on the rising edge of the 266 MHz clock and then transmit DQS on the falling edge, or transmit data on the falling edge and DQS on the rising edge.

Transmitting data on the falling edge of the 266 MHz clock raises several issues. In one embodiment, other components of the system operate on the rising edge. Hence a pipeline register may be needed to interface with these components. To cleanly move data from the rising-edge domain to the falling-edge domain, flops at the boundary should quickly propagate Clock to Q. Effectively, these flops may be clocking at 665 MHz (assuming a worst case duty cycle of 40% - - 266 MHz / .4 = 665 MHz). Thus, the components may need to be tightly placed and no logic placed between flops. Every byte of write data moves from rising edge triggered flop to falling edge triggered flops within mcu_rw_byte.

The wide interface stretching across two sides of the data processor as depicted in Figure 3 may require a relatively deep clock tree insertion. However, a deep clock tree may generate clocks with unacceptable duty cycles due to the asymmetry between positive and negative edges in standard cell library clock buffer elements. For example, asymmetry in the duty cycle may result from buffers that generate faster rising edges than falling edges. As an edge propagates through such a clock tree, this asymmetry may worsen.

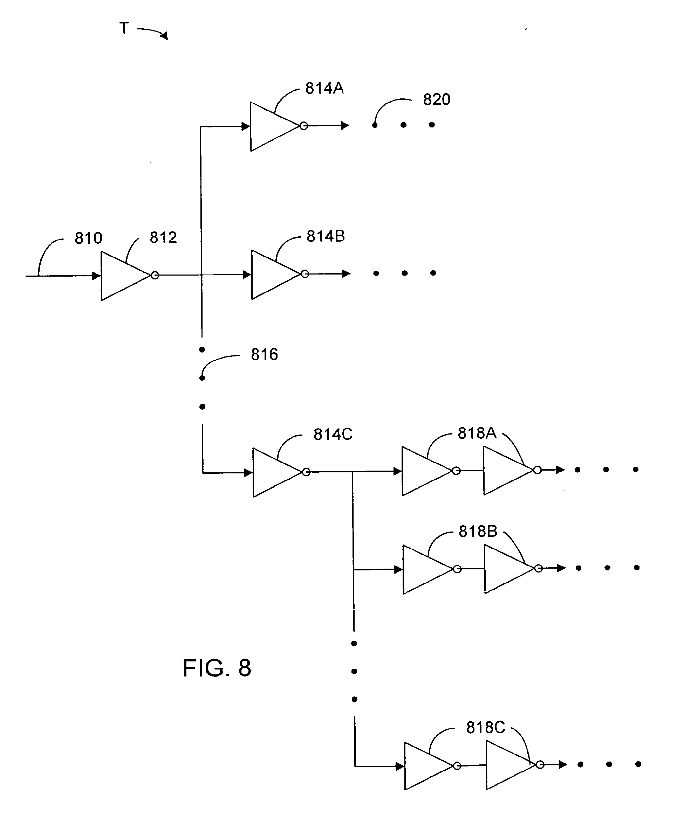

In some embodiments, an alternating inverting clock tree is used to generate clocks and other signals. One embodiment of an alternating inverting clock T is depicted in Figure 8. Inverting buffers 812, 814A-C and buffer pairs 818A-C in the clock tree T invert as well as buffer the signals. Thus, a given clock edge will alternately be a rising edge, then a falling edge as the clock edge propagates through the clock tree. For example, a rising edge at line 810 will be a falling edge at the output of buffer 812, then a rising edge at the output of buffer 814C and so forth. In this way, the duty cycle of the signals generated by the clock tree may be maintained relatively close to 50%. The vertical ellipses (e.g., ellipses 816) indicate that the clock tree may include more branches in the vertical direction. The horizontal ellipses (e.g., ellipses 820) indicate that the clock tree may include more branches in the horizontal direction. There should be an even number of inverting buffers in the horizontal direction through the tree.

As described above, DQS changes with the rising edge of mclk266 and will match the outgoing clock. The first DQS output that starts a burst write begins on the rising edge of mcu2ior_mclk following the write command, but the write data needs to be presented half an mclk266 cycle before that. When in Registered mode, the write data and DQS signals are pushed back a full mcu2ior_mclk cycle. Even though the output data transitions on the falling edge of mclk266, the mcu2ior_dq_en_n signal is asserted low on the rising edge of mclk266 prior to that. This gives an extra half mclk266 cycle to enable the output data buffers. The same applies at the end of the burst before disabling the output data buffers.

This extra time is not provided on the outgoing DQS. For DQS the start of the write preamble is less critical and there is extra margin in the SDRAM specs for this.

Referring now to the read path, a read operation is commenced at the interface between the MCU core 510 and the DDR interface 218 with assertion of the control signals listed in Table 1. Briefly, the MCU core 510 asserts the address, bank select, mcu2ddrio_cs_n != 3, mac2ddrio_ras_n = 1, mac2ddrio_cas_n = 0, and mac2ddrio_we_n = 1 signals. The mcu_ddr_control 318 interprets the command signals from the MCU core 510 and initiates a read operation to the DDR SDRAM 212. This includes driving the address lines to the DDR SDRAM 212.

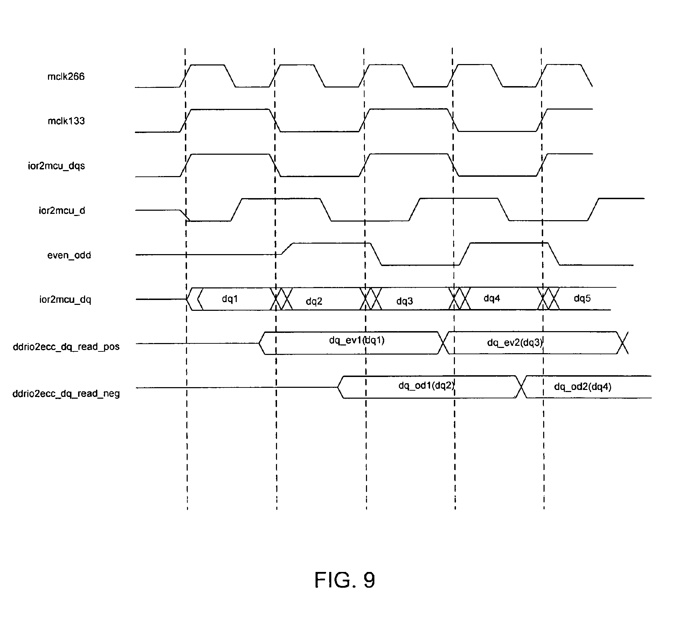

Basic timing waveforms of a read operation from the DDR SDRAM 212 to the DDR interface 218 are depicted in Figure 9. Figure 9 shows the 266 MHz and 133 MHz clocks, DQS and dq data received from the SDRAM (ior2mcu_dqs and ior2mcu_dq, respectively) and DQS delayed one half a mclk266 cycle (ior2mcu_d).

Figure 9 also illustrates how the DDR interface 218 separates the input dq data (ior2mcu_dq) into dq data for each half of the pos and neg dq bus. As discussed above, data is transferred from the DDR interface to the data processor in the 133 MHz domain using a 128 bit dq bus. Accordingly, ior2mcu_dq is alternately sent to ddrio2ecc_dq_read pos or ddrio2ecc_dq_read_neg to generate a double wide bus that is clocked at 133 MHz. The latencies in Figure 9 are merely representative. In practice, there may be multiple clock cycles of delay through the buffers in the DDR interface.

Referring again to Table 1, during a read operation the first word of data routed from the DDR interface 218 to the MCU core 510 appears on ddrio2ecc_dq_read_pos[63:0] and ddrio2ecc_ecc_read_pos[7:0]. The second word appears on ddrio2ecc_dq_read_neg[63:0] and ddrio2ecc_ecc_read_neg[7:0].

With the above overview of the read operation in mind, additional details of the generation of the read signals will be addressed.

The SDRAM specification indicates that read data is sent by the SDRAM relative to both the received SDRAM clock and DQS. However, the timing in the embodiments discussed above may result in a unknown phase delay of the SDRAM clock relative to the transmitted mcu2ior_mclk. Hence, in some embodiments, only DQS is used to clock read data. The design of the mcu_rw_byte assumes that DQS has the same frequency as mcu2ior_mclk. However, the relative phase delay of these signals may vary over a relatively wide range.

The output buffer delays and input buffer delays are closely matched to minimize skew. However, the actual delay of these buffers (e.g., buffers 632 in the communications interface to the DDR SDRAM in Figure 6) may vary over a fairly wide range. In some embodiments, the output buffer delay may be up to 3.3 nS and the input buffer delay may be up to 1.5 nS.

The SDRAM specification indicates that the rising and falling edges of DQS can vary +/- .75 nS relative to the associated edge of the clock ("CLK"). Once on the data processor chip, ior2mcu_dqs is delayed by an adjustable amount to clock in the read data. All of this variance makes it difficult to determine the position of the delayed DQS relative to the 266 MHz clock. Hence, the delayed DQS may be treated as a phase asynchronous signal.

Because the incoming data is, in effect, phase asynchronous to the internal clock domain, the mcu_rw_byte resynchronizes the data. In one embodiment, this is accomplished using a four element resynchronization first-in first-out memory ("FIFO"). Each byte of incoming data goes into one of two four byte FIFOs 614 and 616 (Figure 6) clocked on either the positive or the negative edge of the delayed ior2mcu_dqs. The ior2mcu_dqs signal must go into a small clock tree (not shown in Figure 6) that directly clocks all 64 flops in these resynchronization FIFOs plus the small amount of control logic. Tuning of ior2mcu_dqs to capture the incoming data is described below.

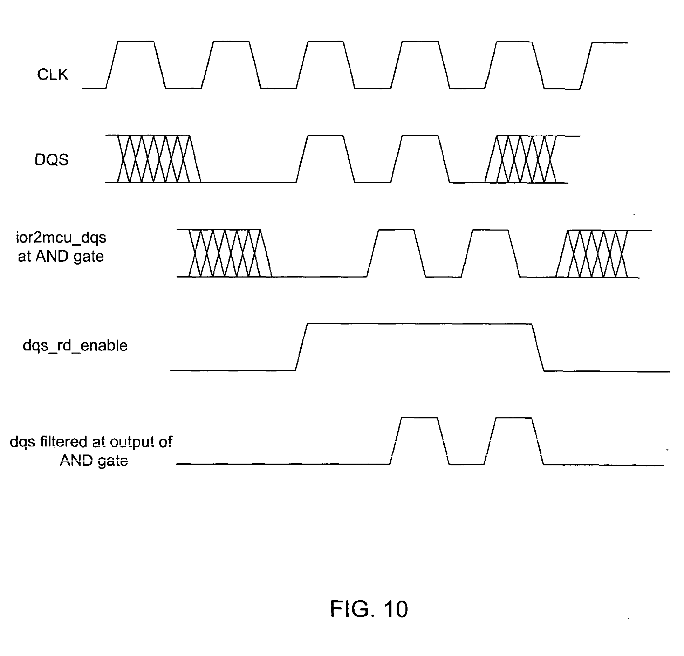

Using DQS to clock read data is complicated by the fact that DQS is driven by the DDR interface 218 during write cycles. DQS will float to a high impedance state when no cycles are in progress. The frequency content of DQS is unknown when in the high impedance state, so DQS must be gated off when it is not functioning as a read data clock. This operation will be discussed in conjunction with the timing diagram depicted in Figure 10 and the mcu_rw_byte system diagram depicted in Figure 6.

The top two waveforms in Figure 10 represent the clock ("CLK") and DQS signals. CLK is generated by the DDR interface 218 in Figure 6. The DQS signals are generated by the DDR SDRAM 212 and the DDR interface 218 in Figure 6. On the printed circuit board (not shown) between the SDRAM chip and the data processor chip, DQS will be unknown or in a high impedance state before a read cycle starts. In Figure 10, the high impedance state of DQS is indicated by the cross hatching. The third waveform in Figure 10 depicts the ior2mcu_dqs signals at the input of the AND gate 624.

The read cycle begins with the read preamble where DQS is driven low for a full CLK cycle. As illustrated in Figure 10, while the read preamble is in progress, the dqs_rd_enable signal goes high to pass the DQS pulses through to the synch_ram_pos flops 614 and synch_ram_neg flops 616. The dqs_rd_enable signal goes low at the end of the read cycle when all the DQS pulses have passed. The last waveform in Figure 10 depicts the ior2mcu_dqs signals that are passed by the AND gate 624.

Timing considerations for dqs_rd_enable will be discussed in conjunction with several data paths 634, 636, 638 and 640 represent by dashed and/or dotted lines in Figure 6. As discussed above, the dqs_rd_enable signal is asserted to a high state at the end of the read preamble. If the delay through path 634 is longer than the delay through path 636 by up to one CLK cycle, then the dqs_rd_enable signal will be asserted true during the read preamble at the input to the AND gate 624 and the read data will be captured as expected. The path 634 should have a longer delay than path 636. If it does not, then dqs_rd_enable may be asserted too early and an unknown value of DQS may pass through the AND gate 624 and clock "garbage" data into the synch_rams 614 and 616.

The timing of the falling edge of dqs_rd_enable is also important. At the 266 MHz operating speed, the time between the last falling edge of DQS and the transition to unknown is only half a CLK cycle time. This may be too short to be controlled by mclk266-driven logic.

As an alternative, the circuitry clocked by DQS counts the number of falling edges of DQS and shuts off it's clock when all have been received. This is done by comparing two grey code counters against each other. The logic uses the grey-code sequence to ensure that the dqs_rd_enable signal is glitch free until it is de-asserted.

In the embodiment of Figure 6, the grey code circuit includes two grey code counters 618 and 620 and a comparator 622. The output of the comparator 622 is the dqs_rd_enable signal. The comparator 622 outputs a 0 when the outputs of the grey counters 618 and 620 are equal. Conversely, the comparator 622 outputs a 1 when the outputs of the grey counters 618 and 620 are not equal.

Before a read cycle begins, the outputs of the two grey counters 618 and 620 are equal. Hence, dqs_rd_enable is not asserted.

At the end of the read preamble and a CAS latency, represented by mcu_cfg_cas_latency from TABLE 1, a do_rd signal is pulsed, incrementing the top grey counter 618. An example of a state machine that generates do_rd follows. The state machine asserts a rd_start signal based on the detection of the read command. This read command is defined as follows: CSn !=3, RASn = 1, CASn = 0, WEn = 1, and phase_133 = 0. The rd_start signal causes CAS latency state registers cl_sr[7:0] to begin counting. The latency of the CAS latency state registers is programmable. In this embodiment the programmed value is based on the value of mcu_cfg_cas_latency [2:0]. The output of the cl_sr [0] register is defined as do_rd. Thus, dqs_grey_cnt[2:0] (counter 618 in Figure 6) is incremented every time cl_sr[0] is asserted.

After counter 618 is pulsed the outputs of the grey code counters 618 and 620 will no longer be equal. This causes the dqs_rd_enable signal to be asserted. As a result, subsequent DQS pulses are passed through the AND gate 624 to clock the synch_rams 614 and 616 and the bottom grey counter 620. The do_rd signal is pulsed again before each DQS pulse in the read burst.

The top grey counter 618 will remain sufficiently ahead of the bottom grey counter 620 during the burst, ensuring that during the entire burst the dqs_rd_enable signal remains asserted when the ior2mcu_dqs signal transitions. On the last DQS assertion, do_rd is not asserted. As a result, the outputs of both grey counters 618 and 620 will again be equal. The dqs_rd_enable signal is deasserted, disabling the AND gate 624 and gating off any high impedance on the DQS signal. This logic essentially turns off its own clock, in this case DQS, within one half clock cycle.

The counter 620 in the DQS domain should be clocked with the direct undelayed output of the gated ior2mcu_dqs to give more time for the circuit to respond and shut off ior2mcu_dqs before the next cycle. Also, this logic creates a combinatorial loop where the comparator circuit gates off its own clock. This loop may need to be broken and timed properly for synthesis, place and route, and analysis.

The read data valid window is very short (in some embodiments approximately 2 ns) and the circuit may need to be tuned to generate this signal in a reliable manner. This tuning may accomplished by setting the DQS delay lock loop delay to 0 and then matching the delays of paths 638 and 640 in Figure 6.

The clock generated at the output of the DQS delay lock loop 628 drives approximately 70 flops. Most of these flops and the associated buffer stages are not shown in Figure 6. These buffer stages should be matched in the ior2mcu_dq[7:0] data path so that the delay characteristics will track over process and temperature.

When the delay of the DQS delay lock loop 628 is taken into account, the DQS signal will transition directly in the middle of the data valid window, the point when data is "most stable". This assumes that the setup and hold times are evenly matched at the flops of the synch_rams 614 and 616. If setup or hold is unbalanced, then path 638 or 640 should be adjusted accordingly.

In the read control logic each of the mcu_rw_byte modules operates from it's own ior2mcu_dqs signal which also acts as a clock to enter data into the four element resynchronization FIFO. With nine DQS signals clocking data into nine separate FIFOs and passing information through nine separate synchronizers, it is very likely that not all of these circuits will behave exactly the same every clock cycle. Accordingly, each module checks whether it is in sync with the others and flags an error if it remains out of sync for three mclk266 cycles in a row.

As described above, after ior2mcu_dqs is delayed by delay circuit 628 within mcu_rw_byte, ior2mcu_dqs clocks data into a four element resynchronization FIFO 614 or 616. A grey-code version of the write pointer is synchronized in the mclk266 domain and compared against a grey code read pointer to indicate when there is data in a specific resynchronization FIFO. The middle byte mcu_rw_byte (instance 4, mcu_rw_byte 320E) is the master that initiates presentation of read data by the other mcu_rw_byte modules. This signal also functions as read_data_valid to the MCU core.

The rd_data_valid_in (rd_data_valid) signal from mcu_rw_byte4 320E in combination with the top grey code counter 618 (Figure 6) in each mcu_rw_byte is used to calculate the fifo_overrun error. If any of the mcu_rw_bytes have three or greater valid entries in their synch_ram FIFOs with respect to the valid entries in mcu_rw_byte4 320E, a fifo_overrun error is asserted within the affected mcu_rw_byte. All mcu_rw_bytes logically check to each other because the master checks itself. All fifo_overrun signals from each mcu_rw_byte are output and sent to the mcu_ddr_control module 318 in mcu_ddrio_top 310, where they are OR'ed for the final error determination and then sent to the MCU core 510.

In summary, all nine mcu_rw_byte instances 320A-320I slave to rd_data_valid_in (an early version of rd_data_valid) and then report a synchronization error if they remain out of synchronization for three cycles in a row. Because of varying delays through the different mcu_rw_byte modules, it is expected that the rd_data_valid signals for each module will vary by a clock cycle, but they should never vary by three cycles. Even though the rd_data_valid signal for a module may lag, the data will still be valid in the module (if it is working properly). This assumes that all rd_data_valid lag is present across the internal synchronizers.

Additional timing issues will now be discussed. The DDR interface effectively isolates the MCU core 510 from timing critical circuitry. This section discusses several data paths and timing tests relating to such timing. In general, write cycle timing is matched over the entire DDR interface while read cycle timing is matched only over the specific instance of mcu_rw_byte. Matching over a smaller region simplifies the calculation, but it has to be repeated nine times, once per byte.

This section discusses read enable vs. DQS read returned from SDRAM. As described above in conjunction with mcu_rw_byte, asserting do_rd at the end of the preamble causes dqs_rd_enable to be asserted. The assertion of do_rd should propagate to dqs_rd_enable before ior2mcu_dqs will appear at the other leg of the AND gate 624. However, the round trip path from mclk266 to mcu2ior_mclk to DDR SDRAM CLK to DQS to ior2mcu_dqs should not be so long that dqs_rd_enable is asserted before the start of the read preamble. Thus, the criteria for one embodiment of this circuit is:

$$(1 \text{ fastest CLK period}) >=$$

$$(\text{delay}(\text{mclk266} \rightarrow \text{mcu2ior\_mclk} \rightarrow \text{CLK} \rightarrow \text{DQS} \rightarrow$$

$$\text{ior2mcu\_dqs at AND gate}) -$$

$$\text{delay}(\text{mclk266} \rightarrow \text{dqs\_rd\_enable})) >= 0$$

Where, for example, delay (mclk266 -> dqs_rd_enable) represents the delay from a clock edge at mclk266 at the input of flop 630 to the generation of dqs_rd_enable at the input of AND gate 624.

This section discusses matching ior2mcu_dqs to ior2mcu_dq ignoring delay lock loop. For each mcu_rw_byte instance, there are eight ior2mcu_dq signals and one ior2mcu_dqs signal. As described earlier, it is important to match all the paths from pad to flop so that they all match to a tight skew constraint. While performing this calculation, the delay across the DQS DLL is set to 0. In practice, the DQS DLL 628 delays ior2mcu_dqs by one quarter of a CLK cycle time to capture data directly in the middle of the read data valid window. Thus, the criteria for one embodiment of this circuit is:

$$\text{skew}( \text{ior2mcu\_dq[ 7:0 ], ior2mcu\_dqs from pad to flop} )$$

$$<= \text{MAX\_DATA\_SKEW (200 ps)}$$

This assumes a non-zero data setup time relative to the clock.

This section relates to dqs_rd_enabled to dqs_rd_enable loop timing. When a read cycle ends with the last falling edge of ior2mcu_dqs, the dqs_rd_enable signal must be deasserted before the end of the read postamble. This time is simply the CLK low time, or tRPST in the SDRAM spec. This time is specified as 40% of a CLK cycle time. Using 6.4 ns as the CLK cycle time, the criteria for one embodiment of this circuit is:

$$\text{delay}( \text{dqs\_enabled} \rightarrow \text{dqs\_rd\_enable} ) <= 6.4 * .4 \text{ (2.56 ns)}$$

This section relates to matching outgoing control and mcu2ior_dq signals. There are several signals that should be matched carefully:

- mcu2ior_mclk should be matched to mcu2ior_mclk_n so that the output waveforms cross between 1.05V and 1.45 V at the input to the DDR SDRAM 212.
- The outgoing data on all 72 mcu2ior_dq signals should have a total skew of less than or equal to 400 ps and be matched to the outgoing mcu2ior_mclk via the falling edge of mclk266.
- The outgoing command and address should have a total skew of less than or equal to 570 ps and be matched to the falling edge of the outgoing mcu2ior_mclk

To insure that the mcu2ior_mclk and mcu2ior_mclk_n cross between 1.05V and 1.45V, the skew between the signals should be calculated at the highest edge rate. For one embodiment of a SSTL2 buffer, the edge rate is 2.73 V/nS with Fast-Fast process and a lightly loaded clock signal on the printed circuit board. This translates to a total skew between mcu2ior_mclk and mcu2ior_mclk_n of 145 ps at the receiving end.

This section relates to rising edge flop to falling edge flop outgoing data speed path timing. The outgoing data passes from a flop triggered off the rising edge of MCLK266 to another triggered off the falling edge of MCLK266. Assuming a worst case 40% duty cycle, then the criteria for one embodiment of this circuit is:

MCLK266->Q + prop delay < MCLK266 rise->MCLK266 fall +

MCLK266 clock skew + flop setup time

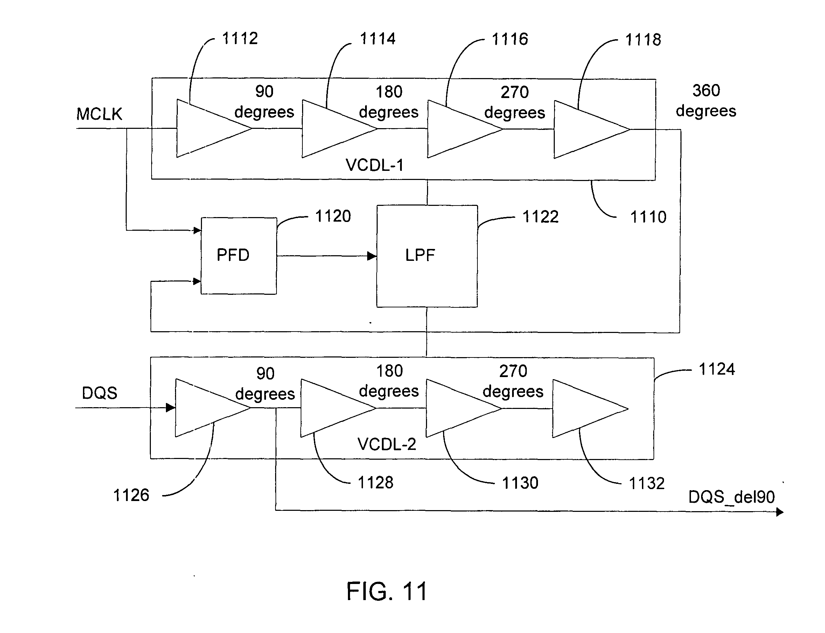

Figure 11 depicts one embodiment of the delay lock loop 628. The delay lock loop 618 regulates the delay line so that the total delay is = T. The delay lock loop incorporates an eight stage voltage controlled delay line 1110 (for the full T delay). Two stages are incorporated into each delay element 112, 114, 116 and 118 in Figure 11. The output of the second stage in element 1112 generates a T/4 delayed clock. By using eight delay stages, the delay lock loop 628 may provide a frequency range exceeding 2:1.

In addition, by incorporating a phase lock loop type edge triggered phase detector (phase frequency detector "PFD") 1120, the delay lock loop 628 is relatively insensitive to the duty cycle of the input signal (e.g., MCLK). Accordingly, in the embodiment of Figure 11 the delay lock loop 628 may operate with input frequencies of 100 MHz and 133 MHz.

The delay lock loop 628 incorporates a phase lock loop type charge pump (not shown). The charge pump reduces ripple on the voltage control line from the low pass filter ("LPF") 1122 when the delay lock loop is locked (i.e., when the input clock and the delayed clocks are phase-locked).

As shown in Figure 11, the delay lock loop 628 includes a second eight stage voltage controlled delay line 1110. Delay elements 1126, 1128, 1130 and 1132 are slaved to the main delay line 1110. The first slaved element (first two slaved delay stages) 1126 delays the DQS pulse by a T/4 delay (90 degrees) to generate DQS_de190. Accordingly, the delay line may be used to pre-compensate for any DQS output multiplexer delay.

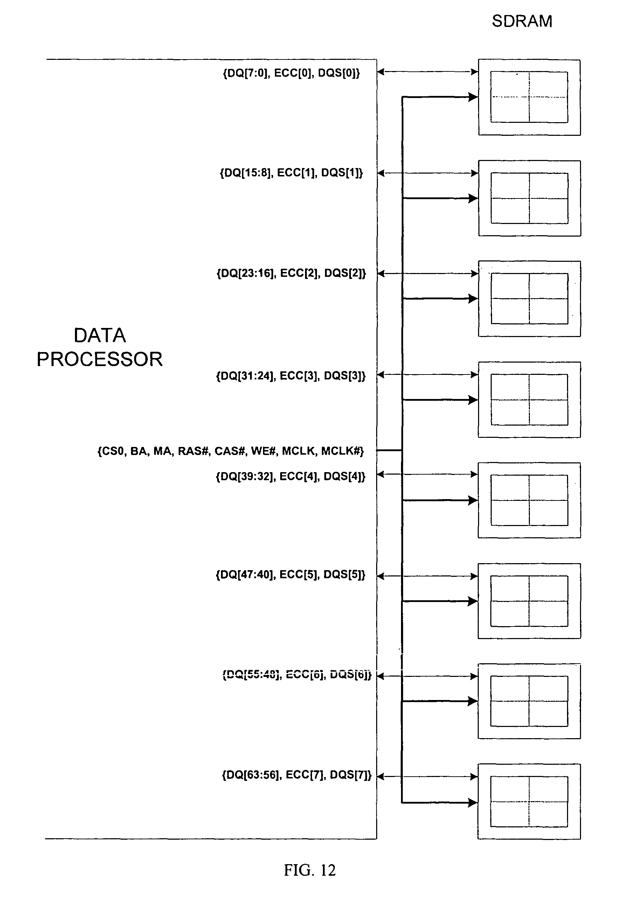

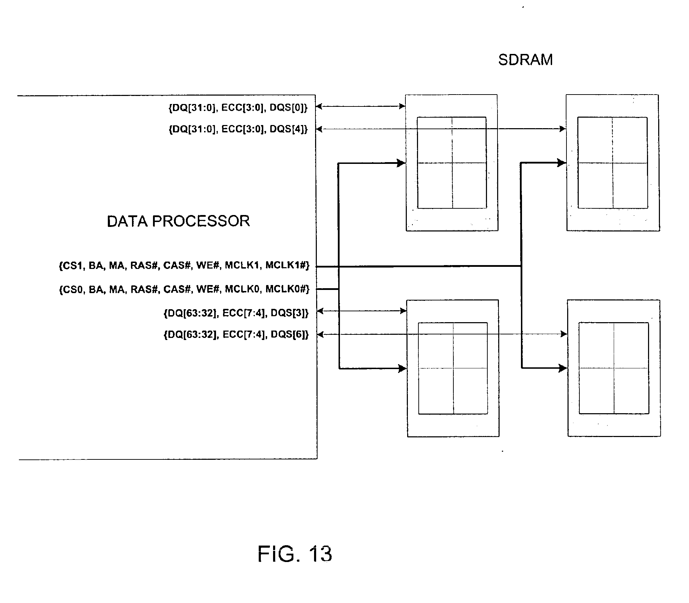

Referring now to Figures 12 and 13, two embodiments of connections between a data processor and DDR SDRAM are depicted. In Figure 12, the data processor is connected to 1 rank of X8 DDR SDRAM. In this case, each mcu_rw_byte is controlled by a separate DQS as discussed above.

In Figure 13, the data processor is connected to 2 ranks of X32 DDR SDRAM. In this case, groups of four mcu_rw_bytes are controlled by a single DQS, with different DQS signals associated with each rank. In addition, separate chip select signals are used for each rank.

As discussed above, different embodiments of the invention may include a variety of hardware and software processing components. In some embodiments of the invention, hardware components such as controllers, state machines and/or logic are used in a system constructed in accordance with the invention. In some embodiment of the invention, code such as software or firmware executing on one or more processing devices may be used to implement the described operations.

Such components may be combined on one or more integrated circuits. For example, in some embodiments several of these components may be combined within a single integrated circuit. In some embodiments some of the components may be implemented as a single integrated circuit. In some embodiments some components may be implemented as several integrated circuits.

The components and functions described herein may be connected/coupled in many different ways. The manner in which this is done may depend, in part, on whether the components are separated from the other components. In some embodiments some of the connections represented by the lead lines in the drawings may be in an integrated circuit, on a circuit board and/or over a backplane to other circuit boards. In some embodiments some of the connections represented by the lead lines in the drawings may comprise a data network, for example, a local network and/or a wide area network (e.g., the Internet).

The signals discussed herein may take several forms. For example, in some embodiments a signal may be an electrical signal transmitted over a wire. Signals as discussed herein also may take the form of data. For example, in some embodiments an application program may send a signal to another application program. Such a signal may be stored in a data memory.

The components and functions described herein may be connected/coupled directly or indirectly. Thus, in some embodiments there may or may not be intervening devices (e.g., buffers) between connected/coupled components.

A wide variety of devices may be used to implement the data memories discussed herein. For example, a data memory may comprise a DDR SDRAM or other types of data storage devices.

In summary, the invention described herein generally relates to an improved data memory interface. While certain illustrative embodiments have been described in detail and shown in the accompanying drawings, it is to be understood that such embodiments are merely illustrative of and not restrictive of the broad invention. In particular, is should be recognized that the teachings of the invention apply to a wide variety of systems and processes. It will thus be recognized that various modifications may be made to the illustrated and other embodiments of the invention described above, without departing from the broad inventive scope thereof. In view of the above it will be understood that the invention is not limited to the particular embodiments or arrangements disclosed, but is rather intended to cover any changes, adaptations or modifications which are within the scope and spirit of the invention as defined by the appended claims.

**Claims**

1. A data memory interface apparatus comprising:

   at least one interface for transmitting data and receiving data at a first data rate;
   at least one memory interface for transmitting data to and receiving data from at least one dual data rate memory at a second data rate;
   at least one processing circuit for generating and receiving at least one dual edged data strobe to transmit data to and receive data from the at least one dual data rate memory.

2. The apparatus of claim 1 wherein the at least one interface uses a clock operating at the second data rate and at least one phase reference signal to clock data into or out of the at least one interface.

3. The apparatus of claim 2 wherein the at least one phase reference signal is indicative of either rising edges or falling edges of a clock operating at the first data rate.

4. The apparatus of claim 2 wherein the at least one phase reference signal is distributed in a daisy chain to a plurality of processing modules in the at least one processing circuit.

5. The apparatus of claim 1 wherein the at least one interface comprises at least one register for clocking data into or out of the at least one interface according to a clock operating at the second data rate.

6. The apparatus of claim 1 wherein the at least one processing circuit comprises at least one delay lock loop for delaying the at least one dual-edged data strobe.

7. The apparatus of claim 6 wherein the at least one delay lock loop provides substantially equal delays for a 100 MHz dual-edged data strobe and a 133 MHz dual-edged data strobe.

8. The apparatus of claim 1 wherein the at least one processing circuit comprises at least one alternating inverting buffer tree for generating the at least one dual-edged data strobe.

9. A method of interfacing to a data memory comprising:

   transmitting data from and receiving data by at least one interface at a first data rate;
   transmitting data to and receiving data from at least one dual data rate memory at a second data rate;
   generating and receiving at least one dual edged data strobe to transmit data to and receive data from the at least one dual data rate memory.

10. A data memory interface apparatus comprising:

   at least one interface for transmitting data to and receiving data from the at least one data processor at a first data rate using a clock signal operating at a second data rate and a phase reference signal;
   at least one memory interface for transmitting data to and receiving data from at least one DDR SDRAM at a second data rate according to at least one DQS signal;
   at least one FIFO for storing data received from the at least one DDR SDRAM; and
   at least one processing circuit comprising:

      at least one circuit for selectively gating at least one DQS signal received from the at least one DDR SDRAM;
      at least one delay lock loop for delaying at least one DQS signal received from the at least one DDR SDRAM; and

at least one alternating inverting buffer tree for generating a plurality of DQS signals from the delayed at least one DQS signal to clock data into the at least one FIFO.

FIG. 1

EP 1 510 930 A2

FIG. 2

EP 1 510 930 A2

| mcu_rw_byte0 | mcu_rw_byte1 | mcu_rw_byte2 | mcu_rw_byte3 | mcu_ddr_control |
|:---:|:---:|:---:|:---:|:---:|
| 320A | 320B | 320C | 320D | 318 |

mcu_ddrio_top

310

312

mcu_ddrio_right

| mcu rw_byte 4 |
|:---:|
| 320E |

| mcu rw_byte 5 |
|:---:|
| 320F |

| mcu rw_byte 6 |
|:---:|
| 320G |

| mcu rw_byte 7 |
|:---:|
| 320H |

| mcu rw_byte 8 |
|:---:|
| 320I |

FIG. 3

MCLK266

MCLK133

PHASE_133

Capture and send
on this edge of MCLK266

Capture and send
on this edge of MCLK266

FIG. 4

FIG. 5

21

FIG. 6

FIG. 7

T

814A

820

810    812    814B

816

814C    818A

818B

FIG. 8

818C

FIG. 9

FIG. 10

FIG. 11

EP 1 510 930 A2

SDRAM

DATA
PROCESSOR

{DQ[7:0], ECC[0], DQS[0]}

{DQ[15:8], ECC[1], DQS[1]}

{DQ[23:16], ECC[2], DQS[2]}

{DQ[31:24], ECC[3], DQS[3]}

{CS0, BA, MA, RAS#, CAS#, WE#, MCLK, MCLK#}

{DQ[39:32], ECC[4], DQS[4]}

{DQ[47:40], ECC[5], DQS[5]}

{DQ[55:48], ECC[6], DQS[6]}

{DQ[63:56], ECC[7], DQS[7]}

FIG. 12

SDRAM

DATA PROCESSOR

{DQ[31:0], ECC[3:0], DQS[0]}

{DQ[31:0], ECC[3:0], DQS[4]}

{CS1, BA, MA, RAS#, CAS#, WE#, MCLK1, MCLK1#}

{CS0, BA, MA, RAS#, CAS#, WE#, MCLK0, MCLK0#}

{DQ[63:32], ECC[7:4], DQS[3]}

{DQ[63:32], ECC[7:4], DQS[6]}

FIG. 13